# EUROPEAN PATENT APPLICATION

(11) **EP 3 305 148 A1**
(43) Date of publication of application: **11.04.2018**
(21) Application number: 17194516.5
(22) Date of filing: 03.10.2017
(51) Int. Cl.: A47J 47/14, B65D 5/42, B65D 5/64

(54) **ELEMENT HAVING REDUCED THERMAL DISPERSION FOR PIZZA**

(30) Priority: 04.10.2016 IT 201600099425
(71) Applicant: de Ghetto, Giambattista, 20097 San Donato Milanese (MI) (IT)
(72) Inventor: de Ghetto, Giambattista, 20097 San Donato Milanese (MI) (IT)
(74) Representative: De Gregori, Antonella

(57) **Abstract**

The invention describes a covering element (10) for pizzas, in a material with a reduced thermal dispersion or thermally insulating, comprising an upper surface (1) and a side surface (2) that extends orthogonally to the upper surface (1) substantially along the perimeter of the same upper surface (1), said covering element (10) being characterized in that the upper surface (1) is provided with an opening (3), preferably with an opening with a triangular section (3).

## Description

The present invention concerns an element with reduced thermal dispersion for pizzas.

More precisely, the present invention concerns a covering element, in a material with a reduced thermal dispersion or thermally insulating, for pizzas.

Pizza is one of the most well-known and most eaten foods in the world: it is a savory gastronomic product typical of Neapolitan cuisine that now, along with pasta, is the most famous product of Italian gastronomy both in Italy and abroad. Just in Italy there are about twelve thousand take-away and home-delivery pizzerias, fourteen thousand traditional dine-in pizzerias, about twelve thousand restaurant/pizzerias and bar/pizzerias with annual per capita consumption of about 7.6 kg of pizza. Such consumption rises to 13 kg in the USA, and is equal to 7.5 kg in Canada, 4.2 kg in France and Germany and 4.3 kg in Spain. In Italy about 8 million pizzas are produced and sold every day.

The most substantial problem or drawback that every pizza consumer encounters is the speed with which the pizza cools down as soon as it is taken out from the oven and arranged on the plate if the pizza is consumed on location, at the restaurant table, or as soon as the takeaway container is opened in the case of takeaway pizza.

It is thus possible to consume only part of the pizza at the ideal temperature, whereas the remaining part is generally consumed at much lower temperatures, temperatures that result in a worsening of the flavor characteristics of the product. Such a problem is even greater in the case of takeaway pizza, where the pizza, once removed from the oven of the pizzeria, is placed is suitable takeaway containers for transportation to the place of consumption, for example to the home of the consumer.

Containers for transporting pizza usually consist of cardboard blanks arranged with folding lines suitable for making a box that can be opened and closed again, so that the pizza can be inserted inside them and thus kept in a substantially closed and insulating environment during transportation.

The pizza, once it has reached its destination, can be eaten directly from the container or transferred onto a plate.

Although the material from which such takeaway containers are made is already a material with a reduced thermal dispersion or thermally insulating, the pizza reaches the place of consumption having undergone a first cooling. Therefore, it becomes even more important to reduce to the minimum the further loss of heat of the product during consumption.

The purpose of the present invention is therefore to find a solution to such a technical problem and, more precisely, the purpose of the present invention is to identify a device or element that makes it possible to keep the temperature of the pizza constant for as long as possible or in any case to minimize the temperature reduction of the pizza when the pizza itself is taken out from the oven or from the takeaway container and is arranged on the plate for consumption.

The purpose of the present invention is to identify a device or element that is at the same time particularly simple to make and, particularly, is simple to use.

The purpose of the present invention is also to identify a device or covering element that can easily be personalized.

The purpose of the present invention is to identify a device or covering element that is versatile and also re-usable.

The object of the present invention is a covering element for pizzas, in a material with a reduced thermal dispersion or thermally insulating, comprising an upper surface and a side surface, which extends orthogonally to the upper surface substantially along the perimeter of the same upper surface, said covering element being characterized in that the upper surface is provided with an opening, said opening being suitable for allowing the consumption of a portion of pizza able to be reached through said opening, without lifting the covering element, and suitable for allowing the consumption of a subsequent portion of pizza through rotation of the covering element itself or of the pizza, thus arranging a new portion of pizza at said opening.

Said opening of the upper surface can also extend to the side surface that extends orthogonally to the portion of upper surface corresponding to the opening.

In a first embodiment of the covering element for pizzas according to the present invention, suitable for being used when the pizza to be consumed is arranged directly on the plate for consumption from the oven or from the takeaway container, the side surface of the covering element is integral with the upper surface and is suitable for resting on a base, keeping said upper surface raised. Said base is an external surface not belonging to the covering element, and more precisely it can consist of the plate on which the pizza to be eaten is rested or of the table itself. This second case occurs if the plate on which the pizza is rested is of smaller diameter than the covering element.

Such a solution advantageously makes it possible to provide a covering element that is particularly versatile and not constrained to the dimensions of the plate.

In such an embodiment, the upper surface is preferably circular in shape and is provided with an opening with a triangular section, having a dimension preferably ranging from a sixth to an eighth of the total dimension of the surface itself.

Said opening of the upper surface can indeed also extend to the side surface orthogonal to the portion of upper surface that constitutes the opening, indeed defining a triangular section.

The thickness of the upper surface can be different from or equal to the thickness of the side surface. Moreover, the thickness of the upper surface, as well as the thickness of the side surface, can vary in the different points, areas of the surface itself.

Such a difference in thickness can make it possible to make a covering element according to the present invention characterized in that it is lighter, while making it possible to obtain the technical effect according to the present invention.

In a second embodiment of the covering element for pizzas according to the present invention, suitable for being used when the pizza is consumed directly in the takeaway container, the covering element comprises an upper surface, a side surface that extends orthogonally to the upper surface substantially along the perimeter of the same upper surface, and a lower rest base integral with the side surface, and said upper surface, side surface and lower base form the takeaway container.

In this second embodiment, the upper surface of the covering element has a substantially square or rectangular form and is provided with a triangular opening, defined by pre-cut lines or punching, having a dimension preferably ranging from a sixth to an eighth of the total dimension of the surface itself.

Preferably, the upper surface is hinged to the side surface along a side of said upper surface.

Said opening of the upper surface can thus also extend to the side surface hinged to the upper surface, for the portion of side surface corresponding to the upper surface that constitutes the opening, indeed defining a triangular section.

In this second embodiment, the triangular opening of the upper surface of the covering element according to the present invention is made at the moment of consumption, by breaking the pre-cut lines or punching present on the upper surface, and possibly in the side surface, which define the opening itself.

The triangular opening defined by the pre-cut lines or punching has an invitation or a flap that facilitates/ allows the opening itself to be made by breaking the pre-cut lines or punching by the user.

Disposable takeaway pizza containers that provide for weakened lines or punching are known in the state of the art. Through such weakened lines or punching, the cover or the base of the container is separated or broken into single sections to be used as trays/plates for the single slices of pizza. Therefore, the product described by the state of the art, once the single elements are separated through the weakened lines, is not a cover with an opening with a triangular section, but rather a base or a cover that has been transformed into multiple support elements, each of which constitutes a triangular section of the cover, to be used as a plate.

Therefore, it is clear that such elements are completely different with respect to the covering element according to the present invention, and they are unable to achieve the purposes and advantages thereof.

The covering element according to the present invention, on the other hand, has the main advantage of keeping the temperature of the pizza constant for as long as possible or in any case of making the temperature decrease of the pizza itself as little as possible, once it is removed from the oven or from the takeaway container and arranged on the plate for consumption.

A further advantage of the covering element according to the present invention is its versatility, how simple it is to make, the ease of personalization and particularly the ease of use by the end consumer.

A further object of the present invention is a method for consuming pizza, having reduced cooling rate of the temperature of the pizza, which provides for the following steps
a) extracting the pizza from the oven and arranging the pizza under a covering element for pizza, comprising an upper surface and a side surface, which extends orthogonally to the upper surface substantially along the perimeter of the same upper surface, the upper surface of said covering element being provided with an opening with a triangular section;
b) consuming the portion of pizza able to be reached through said opening, without lifting the covering element,
c) rotating the covering element itself or the pizza beneath, thus arranging a new portion of pizza at said opening,
d) consuming the new portion of pizza able to be reached through the opening;
e) repeating steps c) and d) until the end of the consumption of the pizza.

Moreover, in the embodiment of the covering element according to the present invention where said element is used with the pizza arranged directly on the plate for consumption, such a covering element can be made of materials with low thermal dispersion or thermally insulating, i.e. having low heat conductivity, which are washable and re-usable, like for example ceramic, porcelain, glass, Teflon, etc., preferably ceramic, thus obtaining the further advantage of an ecologically sustainable product, because it is re-usable a very large number of times, exactly like the dinner plate.

Moreover, the covering element can be personalized in multiple ways, making it in different colors, or reproducing images, names, trademarks, etc. on it.

The covering element according to such an embodiment can also be pre-heated (pre-heating totally analogous to that of the service plate) before being arranged to cover the pizza on the dinner plate. Such a provision clearly allows the pizza to be kept at a higher temperature for a longer time.

The covering element according to such an embodiment of the present invention can also have a gripping element arranged at the center of the upper surface or at least two gripping elements arranged in diametrically opposite positions of the side surface, which facilitate the movement and/or the lifting of the covering element by the user, particularly when the covering element is pre-heated.

In the embodiment of the covering element according to the present invention where said covering element according to the present invention comprises a lower rest base integral with the side surface, and said upper surface, side surface and lower base form the takeaway container in which the pizza is consumed, such a covering element can be made of materials with a reduced thermal dispersion or thermally insulating, i.e. having low heat conductivity, typical of takeaway pizza containers, like for example cardboard, foamed polystyrene, polyethylene, etc., preferably multi-layer cardboard, thus obtaining the advantage of a particularly cost-effective disposable product.

In this second embodiment, as preferred material with a reduced thermal dispersion or thermally insulating it is possible to use, a multi-layer cardboard comprising elements that form closed cavities, such as to promote the thermal insulation of the pizza contained in the takeaway container. Such cavities can be built into the sheet of cardboard that, as known, has a structure such as to allow large amounts of air to be contained inside the thickness of every single sheet. Advantageously, such a special feature makes it possible to obtain a substantial thermal insulation that allows the temperature of the pizza to be maintained with respect to the temperature of the surrounding environment for longer with respect to the use of containers that do not provide for the use of such materials.

Also in such an embodiment, the covering element can be personalized in multiple ways, making it in different colors, or reproducing images, names, trademarks, etc. on it.

In both embodiments, the covering element according to the present invention can be made of a material with low thermal conductivity, like for example cork, polystyrene, wood, cardboard, clay, porcelain, glass, Teflon, etc., where the surface of said covering element facing towards the pizza is coated with a layer of reflective material with very low emission coefficient, like for example polished aluminum or polished derivatives thereof or polished copper or polished derivatives thereof. The choice of the material that constitutes the covering element clearly depends on the embodiment of such an element. For example, cardboard, polystyrene and cork are the materials most suitable for the takeaway embodiment, whereas clay, porcelain, glass, Teflon, etc., are the materials most suitable for the re-usable embodiment.

The embodiments of the covering element according to the present invention are represented as an example and not for limiting purposes in the attached figures.

Figure 1 represents a perspective view of a covering element according to the present invention suitable for being used when the pizza is arranged directly on the plate for consumption, as soon as it is extracted from the oven or from the takeaway container.

Figure 2 represents a perspective view of a covering element according to the present invention suitable for being used when the pizza is consumed directly in a takeaway container of which said covering element constitutes an integral part.

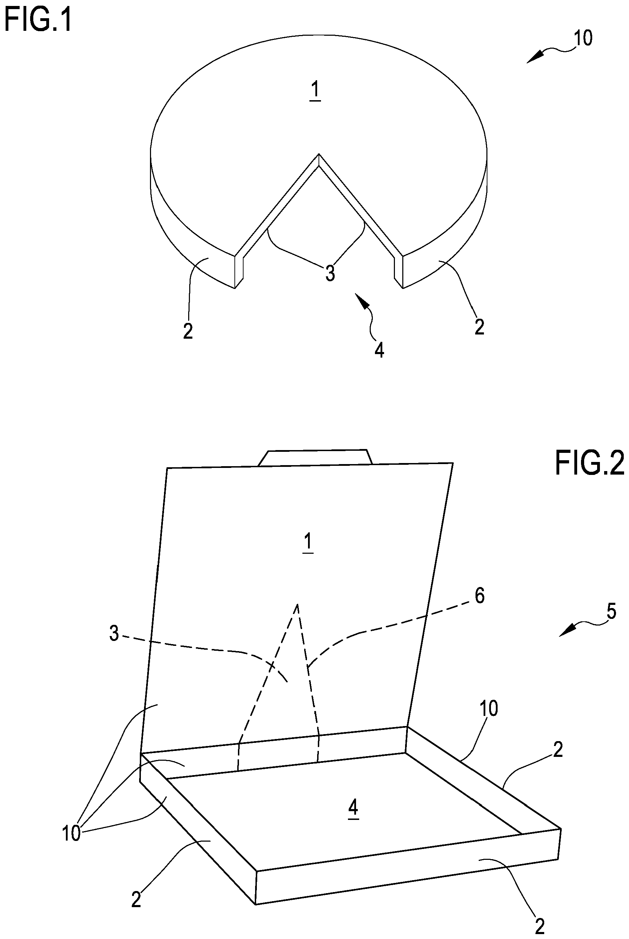

With reference to the aforementioned figures 1 and 2, reference numeral 10 indicates the covering element according to the invention as a whole.

In the embodiment of figure 1, the covering element 10 for pizzas, in a material with a reduced thermal dispersion or thermally insulating, comprises an upper surface 1 and a side surface 2 that extends orthogonally to the upper surface 1, substantially along the perimeter of the same upper surface 1. The upper surface 1 is provided with an opening with a triangular section 3 that also extends on the corresponding portion of side surface 2.

The side surface 2 is used to give rigidity and thickness to the covering element 10 according to the present invention, ensuring the necessary thickness so that the covering element 10 does not make contact with the pizza arranged on the plate, said plate being able to constitute the base 4, thus not belonging to the covering element 10, and on which said side surface 2 of the covering element 10 rests. The base 4, not belonging to the covering element 10, can also consist of the table itself on which the plate containing the pizza is rested.

The side surface 2 is indeed integral with the upper surface 1 and suitable for resting on a base 4, keeping said upper surface 1 raised.

In figure 1, the upper surface 1 is circular in shape and is provided with an opening with a triangular section 3 having a dimension equal to about one sixth of the total dimension of the surface itself 1.

With reference to figure 1, the base 4 (not shown in the figures) can be substantially the plate on which the pizza is arranged. The covering element 10 is thus arranged to cover the pizza as soon as the pizza itself is extracted from the oven or from the takeaway container and arranged on the dinner plate.

The opening with a triangular section 3 exposes only a portion of pizza corresponding to the dimensions of the opening itself 3 to the outside and makes it available to the consumer, thus drastically reducing the surface of pizza exposed for heat exchange with the air. Most of the surface of the pizza thus remains covered by the covering element 10 according to the present invention and, thanks to this, the temperature of the pizza decreases more slowly.

The user, once the consumption of the portion of pizza able to be reached through said opening 3 has ended, without lifting the covering element 10, is capable of rotating/moving the remaining part of pizza with cutlery, thus arranging a new portion of pizza at said opening 3 and ready for consumption. Alternatively, when the covering element 10 has a gripping element arranged at the center of the upper surface 1 (not shown in the figures) or at least two gripping elements arranged in diametrically opposite positions of the side surface 2 (not shown in the figures), the user can proceed to move the covering element 10 (instead of the pizza below) to reveal a new portion of pizza at the opening 3, which can thus be consumed. By proceeding in this way, the decrease in temperature of the pizza with respect to the starting temperature of the pizza that has just been taken out from the oven can be limited or slowed down and the entire pizza can be consumed at a higher temperature with respect to what it would be in the absence of the covering element 10 according to the present invention.

The tests carried out have indeed made it possible to verify that, for the same time periods, the decrease in temperature of the pizza in the case of use of the covering element according to the present invention, is about ten degrees less with respect to the decrease in temperature of a pizza arranged on the dinner plate without any covering element. A temperature difference of about ten degrees less allows the entire pizza to be consumed with characteristics of appeal and flavor closer to those of the pizza just taken out from the oven.

In the embodiment of figure 2, the covering element 10 comprises a lower rest base 4' integral with the side surface 2, and said upper surface 1, side surface 2 and lower base 4' form a takeaway container 5.

The upper surface 1 is substantially square in shape and is provided with a triangular opening 3, defined by pre-cut lines or punching 6, having a dimension roughly equal to one eighth of the total dimension of the surface itself 1. Moreover, the upper surface 1 is hinged to the side surface 2 along a side of said upper surface 1.

With reference to figure 2, the base 4' is therefore the base of the takeaway container 5 on which the pizza is arranged.

In the covering element 10 according to the present invention shown in figure 2, the triangular opening 3 is made at the moment of consumption by breaking the pre-cut lines or punching 6. The user, indeed, thanks to an invitation or flap not shown in the figures, breaks the pre-cut lines or punching 6 and makes the opening 3.

Also in such an embodiment, therefore, the opening with a triangular section 3 exposes only a portion of pizza corresponding to the dimensions of the opening itself 3 to the outside and available to the consumer, thus drastically decreasing the surface of pizza exposed to heat exchange with the air. Most of the surface of the pizza remains covered by the covering element 10 and, thanks to this, the temperature of the pizza decreases more slowly.

The user, once the consumption of the portion of pizza able to be reached through said opening 3 has ended, without lifting the covering element 10, is capable of rotating/moving the remaining part of pizza with cutlery, thus arranging a new portion of pizza at said opening 3 and able to be consumed. By proceeding in this way, the decrease in temperature of the pizza with respect to the starting temperature of the pizza that has just been taken out from the oven is limited or slowed down and the entire pizza can be consumed at a higher temperature with respect to what it would be in the absence of the covering element 10 according to the present invention.

## Claims

1. A covering element (10) for pizzas, in a material with a reduced thermal dispersion or thermally insulating, comprising an upper surface (1) and a side surface (2) that extends orthogonally to the upper surface (1), substantially along the perimeter of the same upper surface (1), said covering element (10) being **characterized in that** the upper surface (1) is provided with an opening (3) with a triangular section (3), said opening being adapted to allow the consumption of a portion of pizza able to be reached through said opening, without lifting the covering element, and adapted for allowing the consumption of a subsequent portion of pizza through rotation of the same covering element or of the pizza, thus arranging a new portion of pizza at said opening.

2. The covering element (10) according to claim 1, wherein the side surface (2) is integral with the upper surface (1) and is suitable for resting on a base (4), keeping said upper surface (1) raised, said base (4) being preferably an external surface not pertaining to the covering element (10).

3. The covering element (10) according to claim 1, wherein the opening (3) of the upper surface (1) extends to the side surface (2), which extends orthogonally to the portion of upper surface (1) which forms the opening (3).

4. The covering element (10) according to claims 2 or 3, wherein the upper surface (1) is circular and is provided with an opening with a triangular section (3) having a dimension preferably ranging from a sixth to an eighth of the total dimension of the surface itself (1).

5. The covering element (10) according to claims 1 or 3, comprising a lower rest base (4') integral with the side surface (2), said upper surface (1), side surface (2) and lower base (4') forming a takeaway container.

6. The covering element (10) according to claim 5, wherein the upper surface (1) has a substantially square or rectangular form and is provided with a triangular opening (3), defined by pre-cut lines or punching (6), having a dimension preferably ranging from a sixth to an eighth of the total dimension of the surface itself (1).

7. The covering element (10) according to claim 6, wherein the triangular opening (3) of the upper surface (1) and possibly of the side surface (2), is formed at the moment of consumption, by breaking the precut lines or punching (6).

8. The covering element (10) according to one or more of the claims from 5 to 7, wherein the upper surface (1) is hinged to the side surface (2) along a side of said upper surface (1).

9. The covering element (10) according to one or more of the claims from 1 to 4, wherein the covering element (10) has a gripping element positioned at the centre of the upper surface (1) or at least two gripping elements arranged in diametrically opposite positions of the side surface (2).

10. The covering element (10) according to one or more of the claims from 5 to 8, wherein said opening (3) defined by precut lines or punching (6) has an invitation or flap suitable for facilitating the breakage of the precut lines or punching (6) thus creating the opening (3) on the part of the user.

11. Method for consuming pizza, having reduced cooling rate of the temperature of the pizza, which provides for the following steps
a) extracting the pizza from the oven and arranging the pizza under a covering element for pizzas, comprising an upper surface and a side surface, which extends orthogonally to the upper surface substantially along the perimeter of the same upper surface, the upper surface of said covering element being provided with an opening with a triangular section;
b) consuming the portion of pizza able to be reached through said opening, without lifting the covering element,
c) rotating the same covering element or the pizza below, thus arranging a new portion of pizza at said opening,
d) consuming the new portion of pizza able to be reached through the opening;
e) repeating steps c) and d) until the consumption of the pizza has ended.
